# Europäisches Patentamt

## European Patent Office

## Office européen des brevets

(11) Veröffentlichungsnummer: **0 014 746**
**B1**

(12) **EUROPÄISCHE PATENTSCHRIFT**

(45) Veröffentlichungstag der Patentschrift:
**21.09.83**

(21) Anmeldenummer: **79104644.4**

(22) Anmeldetag: **22.11.79**

(51) Int. Cl.³: **C 10 M 1/28,** C 10 M 1/32,
C 08 F 2/08, C 08 F 255/02

(54) **Schmieröladditive.**

(30) Priorität: **16.02.79 DE 2905954**

(43) Veröffentlichungstag der Anmeldung:
**03.09.80 Patentblatt 80/18**

(45) Bekanntmachung des Hinweises auf die Patenterteilung:
**21.09.83 Patentblatt 83/38**

(84) Benannte Vertragsstaaten:
**BE FR GB IT NL**

(56) Entgegenhaltungen:
**BE-A-870 329**
**DE-A-1 913 857**
**DE-A-2 106 528**
**FR-A-2 049 799**

(73) Patentinhaber: **Röhm GmbH, Kirschenallee**
**Postfach 4242, D-6100 Darmstadt 1 (DE)**

(72) Erfinder: **Pennewiss, Horst, Dr., Meissnerweg 53,**
**D-6100 Da-Neu-Kranichstein (DE)**
Erfinder: **Benda, Rainer, Dr., Ringstrasse 124,**
**D-6101 Rossdorf (DE)**
Erfinder: **Jost, Heinz, Am Steimel 6a,**
**D-6101 Modautal 3 (DE)**
Erfinder: **Knöll, Helmuth, Brandauer Klinger 16,**
**D-6147 Lautertal 1 (DE)**

ACTORUM AG

Schmieröladditive

Die Technik verwendet in grossem Massstab Schmieröladditive, auf der Grundlage öllöslicher Polymerisate, die das Viskositäts-Temperatur-Verhalten von Mehrbereichsmineralölen verbessern (VI-Verbesserer). Neben der Verdickungswirkung wird von den in Frage kommenden Polymerisaten eine ausreichende Scherstabilität erwartet. Darüber hinaus sollen die Polymerisate möglichst den Stockpunkt des Mineralöls erniedrigen und eine Dispergier- bzw. Detergenzwirkung gegenüber dem auftretenden Kaltschlamm und dem sich absetzenden Schmutz im Motor entfalten.

Zwei Polymerisatklassen werden vor allem für die genannten Aufgaben verwendet: Schmierölzusätze auf der Basis von Poly(meth)acrylaten (PAMA) und von Olefincopolymerisaten (OCP's), insbesondere Äthylen-Propylen-Copolymerisaten. Beide Produktklassen weisen Vorzüge und Nachteile auf. Polyolefine weisen eine ausgezeichnete Verdickungswirkung auf; sie besitzen aber keine stockpunkt-erniedrigende Wirkung, so dass ihnen Stockpunktverbesserer zugesetzt werden. Allerdings treten bei gewissen, besonders den zur Assoziatbildung neigenden Polyolefinen bei Zugabe von Stockpunktverbesserern Schwierigkeiten auf. Polymethacrylate zeichnen sich durch eine gute Wirkung hinsichtlich des Viskositäts-Temperatur-Verhaltens der damit verbesserten Öle und in ausreichend hoher Konzentration durch eine hervorragende Verschleissschutzwirkung aus. Hervorzuheben ist auch ihre stockpunkt-erniedrigende Wirkung.

Es lag nun die Überlegung nahe, Produkte aus beiden Polymerisatklassen zu kombinieren, um damit Schmieröladditive mit verbesserten Eigenschaften zu schaffen. Die Technik erwartet die Bereitstellung von Schmieröladditiven in flüssiger Form (Ölbasis) mit einem möglichst hohen absoluten Polymerisatgehalt.

Solange jeweils nur ein geringer Anteil (höchstens ca. 5 Gew.-%, bezogen auf den Gesamtpolymerisatgehalt) von Polymerisaten der einen Klasse mit einem überwiegenden Anteil der anderen Klasse kombiniert wird, etwa durch Mischen der Lösungen beider Produkte in Öl, treten keine merklichen Schwierigkeiten auf.

Im Interesse einer optimalen Zusammensetzung erscheint es wünschenswert, den Gehalt der im Unterschuss zugesetzten Polymerisatklasse auf wesentlich über 5 Gew.-% zu steigern, wobei die den technischen Erfolg der Einzelkomponenten bedingenden Eigenschaften wie Zusammensetzung, Molgewicht usw. möglichst beibehalten werden sollen. Mischt man jedoch einer Polymethacrylat-Lösung in Mineralöl Polyolefine über die als Anhalt genannte Grenze hinaus zu, so tritt die Unverträglichkeit der beiden Polymerisatklassen in Erscheinung: Es kommt zu einer Phasentrennung der Polymerisate, die bei ausreichend langer Lagerung zu Schichtenbildung führen kann. Zur Vermeidung solcher Trennerscheinungen, die in der überwiegenden Zahl der Verarbeitungsfälle das Produkt als unbrauchbar ausweisen, ist bereits vorgeschlagen worden, eine Verträglichkeit zwischen Polyolefinen und Polymethacrylaten durch Polymerisation der Methacrylsäureester – bekanntlich handelt es sich um solche mit einem $C_8$–$C_{18}$-Alkoholrest – in der Lösung des Polyolefins in Öl zu bewirken. Es ist bekannt, dass das Methacrylat auf das Polyolefin zum Teil pfropfend aufpolymerisiert (DE-AS 1 235 491).

In der DE-OS 2 363 792 wird eine Lösung des oben aufgezeigten Problems dadurch empfohlen, dass man miteinander verträgliche polymere Additive kombiniert. Anspruchsgemäss fällt darunter die Kombination eines Mischpolymerisats aus Einheiten von $C_4$–$C_{22}$n-Alkylmethacrylaten und ggf. entweder Dialkylaminoalkylmethacrylat oder N-(Alkanon)-acrylamid-Einheiten, das ein Zahlenmittel-Molekulargewicht von etwa $3 \cdot 10^4$ bis $12 \cdot 10^4$ besitzt als Stockpunkterniedriger mit einem VI-Verbesserer, bestehend aus einem Äthylen/Propylen-Mischpolymerisat mit einem Molekulargewicht von etwa $10^4$ bis $10^5$, einem $\bar{M}_w/\bar{M}_n$-Verhältnis < 5 und einem Anteil der Propylen-Einheiten von 40 bis 70%.

Gemäss der japanischen Patentanmeldung 50-111 138 erhält man durch Lösungspolymerisation von beispielsweise Butylacrylat und Methylmethacrylat in Gegenwart eines hydrierten Polybutadiens oder eines Cyclopentadien-Äthylen-Propylen-Kautschuks stabile Polymerisat-Dispersionen.

Die Aufgabe, Kombinationen von Olefincopolymerisaten mit Polymethacrylaten, welche die erwünschten Eigenschaften beider Polymerenklassen vereinen in einer Form zur Verfügung zu stellen, die die Anforderungen des Handelns und der Technik erfüllen, war jedoch nicht in befriedigender Form gelöst worden.

Derartige Handelsformen sollen einen Polymerisatgehalt möglichst nicht unter 30% aufweisen. Im Hinblick auf die von der Technik vordringlich gestellte Forderung, den Schmierölen, insbesondere in schnell laufenden Motoren einen hohen Verschleissschutz zu verleihen, sollten die Produkte eine Polymerisatkomponente enthalten, die zu 50 bis 80 Gew.-% aus Methacrylatbausteinen und zu 50 bis 20 Gew.-% aus einem Olefinhomo- oder Copolymerisat besteht. Eine entsprechende Lehre gibt die deutsche Patentanmeldung P 2 740 449.5 an. Diese Patentanmeldung enthält einen Vorschlag zur Lösung der mit der hohen Viskosität der in Frage stehenden Polymerisatlösungen zusammenhängenden Probleme.

In den gewünschten Konzentrationen sind PAMA-Lösungen relativ viskos, OCP-Lösungen sind gleichfalls hochviskos. A priori schien daher keine Aussicht zu bestehen, zu Kombinationen beider Produktklassen zu kommen, die eine technisch brauchbare Viskosität aufweisen.

Ein Weg zur Herstellung technisch hervorragend brauchbarer konzentrierter Polymerisatemulsionen, die Olefincopolymerisate und gleichzeitig Polymethacrylate enthalten, bei denen der Olefincopolymerisatanteil, der hauptsächlich zur Viskosität des Gemisches beiträgt, durch die Polymethacrylatphase als kontinuierliche Phase emulgiert wird, sowie die Polymerisatemulsionen selbst, ist Gegenstand der vorliegenden Erfindung.

Erfahrungsgemäss müssen die Bedingungen so gewählt werden, dass die, das Olefincopolymerisat enthaltende disperse Phase zu keinem Zeitpunkt in die kontinuierliche Phase übergeht, weil sich sonst hohe Viskositäten bzw. Geliererscheinungen nicht vermeiden lassen. Bei weiterem Verdünnen mit Mineralöl macht sich die Tendenz zur Phasentrennung, die letzten Endes zur Unbrauchbarkeit der Produkte führt, immer stärker bemerkbar. Es galt demnach insbesondere zwei Probleme zu lösen:

Nämlich das Gelieren der Konzentrate beim Verdünnen zu vermeiden und bei noch niedrigerer Konzentration die Auftrennung der Phasensysteme zu verhindern.

Man kam der Lösung der Probleme dadurch relativ nah, dass man Stabilisatoren zusetzte, um das einmal gebildete Phasensystem zu stabilisieren. Hierfür eignen sich Pfropf- oder Blockpolymerisate, die Anteile aus beiden Polymerisatklassen enthalten. Im allgemeinen empfiehlt es sich jedoch, diese Stabilisatoren nur in solchen Mengen zuzusetzen, die eine Stabilisierung in konzentrierter Form gewährleistet. Verwendet man z.B. aus technischen Erwägungen heraus die besonders günstigen Olefincopolymerisate mit besonders guter Verdickungswirkung, so nimmt bei Zusatz eines relativ hohen Anteils an Pfropfpolymerisaten als Stabilisatoren die Wirksamkeit als VI-Verbesserer ab.

Damit schien eine einstufige Einarbeitung des OCP von vornherein zu weniger wirksamen Produkten zu führen als eine mehrstufige. Mit dieser Vorstellung des Fachmanns steht die Lehre der DE-A 2 740 449 im Einklang, die ausschliesslich mehrstufige Einarbeitung vorsieht.

Es wurde nun gefunden, dass man konzentrierte Polymerisatemulsionen aus Polymethacrylaten und Olefincopolymerisaten in flüssigen Trägern zur Verwendung als Öladditive erhält, die bei nachfolgender Verdünnung mit Öl bis hinab auf ca. 10% Polymerisatgehalt die Merkmale des existierenden dispersen Systems beibehalten, wenn man als kontinuierliche Phase Polymethacrylate mit einem definierten niedrigen Molgewichtsbereich, als disperse Phase ein Olefincopolymerisat mit einem hinsichtlich der Verdickungswirkung komplementären Molekulargewicht, einem Trägermedium, das gegenüber den (Meth)-acrylsäureestern als gutes Lösungsmittel gegenüber den Olefincopolymerisaten aufgrund des darin gelösten (Meth)acrylsäureesters als wesentlich weniger gutes Lösungsmittel (bis hin zum Fällungsmittel) wirkt und als Stabilisatoren für die Phasenverteilung ein Pfropf- und/oder ein Blockpolymerisat aus Olefincopolymerisaten und (Meth)acrylsäureestern enthält. Bei mehrstufigem OCP Zusatz besteht das Trägermedium aus Mineralöl und Lösungsmitteln aus der Gruppe der Ester und/ oder der höheren Alkohole, die gegenüber dem OCP als ein wesentlich weniger gutes Lösungsmittel wirken. Die erfindungsgemäss zu verwendenden Olefincopolymerisate sind bekannt. Es handelt sich in erster Linie um solche, die aus Äthylen, Propylen, Butylen oder/und Isobutylen aufgebaut sind. Derartige Olefincopolymerisate sind beispielsweise in den deutschen Offenlegungsschriften DE-A 1 644 941, DE-A 1 769 834, DE-A 1 939 037, DE-A 1 963 039 und DE-A 2 059 981 beschrieben.

Bevorzugt sind Äthylen-Propylen-Copolymere; auch Terpolymere unter Zusatz der bekannten Terkomponenten wie Äthyliden-Norbornen sind möglich, es ist jedoch deren Neigung zur Vernetzung beim Alterungsprozess mit einzukalkulieren. Die Verteilung kann dabei weitgehend statistisch sein; es können aber auch mit Vorteil Sequenzpolymere mit Äthylenblöcken angewendet werden. Das Verhältnis der Monomeren Äthylen-Propylen ist dabei innerhalb gewisser Grenzen variabel, die bei etwa 75% für Äthylen und etwa 80% für Propylen als obere Grenze angesetzt werden können. Infolge seiner verminderten Löslichkeitstendenz in Öl ist bereits Polypropylen weniger geeignet als Äthylen-Propylen-Copolymere.

Bei den Polymethacrylaten handelt es sich ebenfalls um bekannte Polymerisate, die aus Methacrylsäureestern mit 6 bis 22 C-Atomen im Alkoholrest, vorzugsweise solchen mit 8 bis 18 C-Atomen, gegebenenfalls in untergeordneten Mengen aus weiteren, mit den genannten Methacrylsäureestern copolymerisierenden Monomeren aufgebaut sind.

Bei den in untergeordneten Mengen, in der Regel unter 10 Gew.-% beizufügenden Monomeren kann es sich z.B. um Monomere mit polaren Gruppen handeln, insbesondere geeignete polymerisationsfähige heterocyclische Verbindungen, die bekanntlich eine Dispergier- und Detergenzwirkung zu der VI-verbessernden, der Stockpunktwirkung und der Verschleissschutzwirkung der Basispolymerisate beitragen können.

Derartige Monomere bzw. Copolymerisate mit (Meth)acrylaten sind z.B. Teil der Lehre der DE-C 947 186, der DE-C 1 003 896, der DE-B 1 058 739 und der DE-C 1 745 359. Pfropfmischpolymerisate von Polyolefinen mit polymerisierbaren stickstoffhaltigen, insbesondere heterocyclischen Verbindungen mit Dispergier-Wirkung neben VI-verbessernder Wirkung werden in der DE-B 1 235 491 vorgeschlagen.

Besonders erwähnt seien Vinylpyridin, Vinylpyrrolidin, Vinylpyrrolidon und Vinylimidazol – sowie Derivate derselben, insbesondere die alkylierten Heterocyclen dieses Typs – als heterocyclische Monomere zur Copolymerisation mit den genannten Methacrylsäureestern. Diese heterocyclischen Monomeren können mit Vorteil auch kombiniert angewendet werden.

Das für die Qualität der erfindungsgemäss zu realisierenden Polymerisatemulsion mitausschlaggebende Trägermedium ist durch die Anforderung definiert, dass es gegenüber den (Meth)acrylsäureestern als gutes Lösungsmittel, gegenüber den Olefincopolymerisaten als wesentlich weniger gutes Lösungsmittel bis hin zum Fällungsmittel wirkt. Ferner sollte es naturgemäss im ganzen inert und unbedenklich sein. Trägermedien, die die genannten Bedingungen erfüllen, gehören z.B. zur Gruppe der Ester und/oder zur Gruppe der höheren Alkohole. Sie werden meist im Gemisch mit Mineralölen, in besonderen Fällen auch alleine eingesetzt. In der Regel enthalten die Moleküle der als Trägermedium in Frage kommenden Verbindungstypen mehr als 8 Kohlenstoffatome pro Molekül.

Hervorzuheben sind in der Gruppe der Ester: Phosphorsäureester, Ester von Dicarbonsäuren, Ester von Monocarbonsäuren mit Diolen oder Polyalkylenglykolen, Ester von Neopentylpolyolen mit Monocarbonsäuren. [Vergleiche Ullmanns Enzyklopädie der Technischen Chemie, 3. Aufl., Bd. 15, S. 287–292, Urban & Schwarzenberg (1964).] Als Ester von Dicarbonsäuren kommen einmal die Ester der Phthalsäure in Frage, insbesondere die Phthalsäureester mit $C_4$–$C_8$-Alkoholen, wobei Dibutylphthalat und Dioctylphthalat besonders genannt seien, sodann die Ester aliphatischer Dicarbonsäuren, insbesondere die Ester geradkettiger Dicarbonsäuren mit verzweigtkettigen primären Alkoholen. Besonders hervorgehoben werden die Ester der Sebazin-, der Adipin- und der Azelainsäure, wobei insbesondere die 2-Äthylhexyl-, Isooctyl-3,5,5-Trimethylhexylester, sowie die Ester mit den $C_8$-, $C_9$- bzw. $C_{10}$-Oxoalkoholen genannt werden sollen.

Besondere Bedeutung besitzen die Ester geradkettiger primärer Alkohole mit verzweigten Dicarbonsäuren. Als Beispiele seien die alkylsubstituierte Adipinsäure, beispielsweise die 2,2,4-Trimethyladipinsäure genannt.

Als Alkoholkomponente kommen mit Vorteil z.B. die vorstehend genannten Oxo-Alkohole in Frage. Als Ester von Monocarbonsäuren mit Diolen oder Polyalkylenglykolen seien die Di-Ester mit Diäthylenglykol, Triäthylenglykol, Tetraäthylenglykol bis zum Dekamethylenglykol, ferner mit Dipropylenglykol als Alkoholkomponenten hervorgehoben. Als Monocarbonsäuren seien die Propionsäure, die (Iso)buttersäure sowie die Pelargonsäure spezifisch erwähnt – genannt sei beispielsweise das Dipropylenglykoldipelargonat, das Diäthylenglykoldipropionat – und Diisobutyrat sowie die entsprechenden Ester des Triäthylenglykols, sowie der Tetraäthylenglykol-di-2-äthylhexansäureester.

Es sei erwähnt, dass auch Gemische aus den vorstehend beschriebenen Lösungsmitteln für das Trägermedium in Frage kommen. Der Anteil des Trägermediums an der konzentrierten Polymerisatemulsion beträgt in der Regel 80 bis 25 Gew.-%, vorzugsweise unter 70, speziell 60 bis 40 Gew.-%. Das, die Hauptmenge der Trägerflüssigkeit für die erfindungsgemässen konzentrierten Polymerisatemulsionen bildende Mineralöl entspricht den üblichen Spezifikationen für Motorenöle. Es besitzt in der Regel Viskositätswerte von $\eta\,100\,°C$ zwischen 3,5 und 6,5 mm²/s. Grundsätzlich machen die technischen Verfahren zur Herstellung der erfindungsgemässen Emulsionen von gebräuchlichen Polymerisationsverfahren Gebrauch. Dies gilt insbesondere auch für die Verwendung von Initiatoren, Einhaltung von Randbedingungen u.ä.

Die technische Anwendbarkeit der erfindungsgemässen konzentrierten Polymerisatemulsionen beruht in nicht geringem Masse auch auf den die Phasenverteilung stabilisierenden Mitteln (Emulgatoren).

Zu den erfindungsgemäss anwendbaren Emulgatoren gehören sowohl Pfropf- als Blockpolymerisate. Die Pfropf- bzw. Blockpolymerisate sollen, um die angestrebte Emulgatorwirkung zu besitzen, einerseits Sequenzen besitzen, die mit dem Polymethacrylat verträglich sind, anderseits Sequenzen, die mit dem Olefincopolymerisat verträglich sind.

Die Molekulargewichte dieser Sequenzen (Einzelzweige) sind in der Regel gleich oder grösser als das Molekulargewicht des jeweiligen Polymerisats, mit dem es Verträglichkeit herstellen soll.

Die zur Stabilisierung notwendige Menge an Pfropf- und/oder Blockpolymerisat wird in der Regel 5 Gew.-%, bezogen auf das Gesamtpolymerisat, nicht unterschritten. Die Methoden zur Herstellung geeigneter Pfropfpolymerisate sind an sich bekannt. So kann z.B. nach der Übertragungsmethode bei der Pfropfung vorgegangen werden oder man kann ein geeignetes Basispolymerisat mit funktionellen Gruppen umsetzen mit einem entsprechenden Polymerisat, das komplementäre funktionelle Gruppen enthält usw.

Ein Verfahren zur Herstellung von geeigneten Blockpolymerisaten besteht z.B. in der anionischen Polymerisation. Dabei kann man beispielsweise so vorgehen, dass man Isopren bzw. Butadien mit einem geeigneten anionischen Initiator (z.B. metallorganische Verbindung) polymerisiert und die «lebenden» anionischen Kettenenden mit z.B. Alkylmethacrylat umsetzt. Die so hergestellten Polymerisate werden anschliessend unter Bedingungen hydriert, unter denen die Estergruppe nicht angegriffen wird. Bezüglich Einzelheiten der Herstellung von Block- und Pfropfcopolymerisaten sei auf die einschlägige Literatur verwiesen, z.B. Houben-Weyl, Methoden der Org. Chemie, 14/1, S. 110ff.; Block Copolymers, D.C. Allport, W.H. Janes, Appl. Sci. Publishers Ltd., London, 1973; Graft Copolymers, H.A.J. Battaerd, G.W. Tregear, Polymer Reviews Vol. 16 (1967); Block and Graft Polymers, W.J. Burlant, A.S. Hoffman, Reinhold Publishers Corp., New York, 1960.

Es stehen dabei mehrere Möglichkeiten für das technische Vorgehen offen: Zum Beispiel kann der Stabilisator mit Vorteil durch pfropfende Polymerisation «in situ» erzeugt werden. Dabei wird man in der Regel zumindestens einen Teil des (vorgefertigten) Olefincopolymerisats in einer geeigneten Menge des Mineralöls in einem Polymerisationsgefäss vorlegen. Legt man den gesamten OCP-Anteil vor, so erhält man den höchsten Pfropfanteil.

Man kann zur Bildung der Pfropfpolymerisate einen gewissen Bruchteil des Gesamtpolyolefins vorgeben, beispielsweise in der Grössenordnung 40 bis 50 Gew.-%. Als Richtwert kann dabei eine Konzentration von 10 Gew.-% in Mineralöl angesehen werden. Zu der in einem geeigneten Polymerisationsgefäss befindlichen Lösung gibt man dann die Monomerenkomponente, z.B. Methacrylsäureester eines $C_{12}$–$C_{18}$-Alkoholgemischs zusammen mit einem oder mehreren geeigneten Initiatoren.

Für die Einführung polymerisationsfähiger heterocyclischer Monomeren ergeben sich ebenfalls alternative Vorgehensweisen. Beispielsweise kann man im Anschluss an eine einstufige Ausführung (Polymerisation in Anwesenheit des gesamten OCP durch Zugabe der Methacrylatmonomeren) abschliessend die heterocyclischen Monomeren pfropfend aufpolymerisieren. Besonders bevorzugt sind hier Vinylimidazol und/oder N-Vinylpyrrolidon. Bei mehrstufiger Verfahrensgestaltung können die polymerisationsfähigen heterocyclischen Monomeren z.B. vor oder nach der zweiten OCP-Einarbeitung zugesetzt werden. Es hat Vorteile auch noch einen Pfropfungsanteil auf OCP zu erzeugen.

Als weitere Möglichkeit kann man die polymerisationsfähigen heterocyclischen Verbindungen auch gleichzeitig mit der Methacrylat-Komponente copolymerisieren.

Die nach den vorstehenden Angaben hergestellten Polymerisate in Öl dienen als Substrat für den entscheidenden Schritt zur Herstellung konzentrierter Polymerisatemulsionen mit stabilem Phasenaufbau, nämlich durch Zugabe des bzw. der gegenüber den Polymethacrylaten als gutes, gegenüber den Olefincopolymerisaten wegen des Gehalts an Polyalkyl(meth)acrylaten als wesentlich weniger gutes Lösungsmittel wirkenden Trägermediums. Man kann jedoch auch von vornherein in Gegenwart von Anteilen oder der gesamten Menge des Trägermediums arbeiten.

Die folgenden Ausführungsbeispiele dienen zur Erläuterung der Erfindung sollen aber hinsichtlich des nachgesuchten Schutzes nicht beschränkend wirken.

Allen Trägermedien gemeinsam ist das schlechte Lösevermögen für OCP. Als Anhaltspunkt kann dienen, dass geeignete Trägermedien, die das PAMA gelöst enthalten, in der Regel OCP zu weniger als 5 Gew.-%, in den meisten Fällen zu weniger als 2 Gew.-%, lösen.

Beispiel 1

In einem 2-l-Vierhalskolben mit Rührer, Thermometer, Rückflusskühler und Dosierleitung wird folgende Mischung vorgelegt:
765 g Mineralöl ($\eta$ 100 °C = 5,3 mm²/s)
85 g Äthylen-Propylen-Copolymerisat (72% Äthylen; $\bar{M}_w$ = 100.000; U = 0,8; SSI*) (1%ig Mineralöl) = 22)
94,5 g Methacrylsäureester eines $C_{12}$–$C_{18}$-Alkoholgemisches
1,5 g tert.-Butylperoctoat

Nach Lösen der Komponenten wird bei 98 °C nachstehendes Gemisch über einen Zeitraum von 3,5 Stunden gleichmässig zudosiert:
387,5 g Methacrylsäureester eines $C_{12}$–$C_{18}$-Alkoholgemisches
6,6 g tert.-Butylperoctoat.

Zwei Stunden nach Zulaufende wird mit 0,96 g tert.-Butylperoctoat nachgefüttert. Gesamtpolymerisationszeit 8 Stunden. Das gebildete Polyalkylmethacrylat besitzt ein Molekulargewicht $\bar{M}_w \approx 70.000$ bei $U \approx 1$ (Bestimmung mit der GPC) und ist damit nach DIN 51382 praktisch scherstabil. Der hierbei auf das OCP aufgepfropfte Anteil hat Emulgatorfunktion.

Danach Zugabe von:
133,2 g Äthylen-Propylen-Copolymerisat (72% Äthylen; $\bar{M}_w$ = 100.000; U = 0,8; SSI*) (1%ig Mineralöl) = 22).

Nach Auflösen bei 100 °C innerhalb von 8 Stunden Zugabe von:
21,9 g N-Vinylpyrrolidon
7,3 g N-Vinylimidazol
1,8 g tert.-Butylperbenzoat.

Die Pfropfung erfolgt dann bei 130 °C, wobei jeweils nach 1 und 2 Stunden weitere 0,87 g tert.-Butylperbenzoat nachgefüttert werden. Gesamtdauer der Pfropfung 6 Stunden. Es wird eine trübe, viskose Emulsion erhalten.

Polymerisatgehalt der Emulsion: 48,7 Gew.-%
Viskosität (100 °C, 48,7 Gew.-%ig) = 9000 mm²/s
Viskosität (100 °C, 5%ig in Mineralöl mit $\eta$ 100 °C = 5,3 mm²/s) = 12,2 mm²/s
SSI* (5%ig in Mineralöl mit $\eta$ 100 °C = 5,3 mm²/s) = 23
Stickstoffgehalt des isolierten Polymerisats = 0,40 Gew.-%.

Nach Verdünnen der 48,7%igen Emulsion mit Mineralöl ($\eta$ 100 °C = 4,1 mm²/s) auf 40 Gew.-% Polymergehalt:
Viskosität (100 °C, 40%ig) = 3.800 mm²/s.

Nach Verdünnen der 48,7%igen Emulsion mit dem Diester der 2,2,4-Trimethyladipinsäure mit einem $C_8$–$C_{10}$-Alkoholgemisch ($\eta$ 100 °C = 3,3 mm²/s) auf 40 Gew.-% Polymerisatgehalt:
Viskosität (100 °C, 40%ig) = 2.700 mm²/s.

Da Esteröl für das OCP ein Nichtlösungsmittel ist, führt die Verdünnung damit zu einer Entquellung der dispersen OCP-Phase und damit zu einer stärkeren Viskositätserniedrigung als bei entsprechender Verdünnung mit Mineralöl. Der beanspruchte 2phasige Zustand ist gut im Phasenkontrastmikroskop zu erkennen. Die dunklen, dispersen OCP-Teilchen haben einen Durchmesser von 1–20 µm.

* SSI = Scherstabilitätsindex = Verlust an Verdikkungswirkung in % bei Scherstabilitätsprüfung nach DIN 51382

Beispiel 2

In einem 2-l-Vierhalskolben mit Rührer, Thermometer, Rückflusskühler und Dosierleitung wird folgende Mischung vorgelegt:
76,6 g Äthylen-Propylen-Copolymerisat (72% Äthylen; $\bar{M}_w$ = 100.000; U = 0,8; SSI*) (1%ig Mineralöl) = 22)

689,4  g Mineralöl ($\eta$100 °C = 5,3 mm²/s)
85,0  g Methacrylsäureester eines $C_{12}$–$C_{18}$-Alkoholgemisches
1,38 g tert.-Butylperoctoat.

Nach Lösen der Komponenten wird bei 98 °C nachstehendes Gemisch über einen Zeitraum von 3,5 Stunden gleichmässig zudosiert:

350  g Methacrylsäureester eines $C_{12}$–$C_{18}$-Alkoholgemisches
5,95 g tert.-Butylperoctoat.

Zwei Stunden nach Zulaufende wird mit 0,87 g tert.-Butylperoctoat nachgefüttert. Gesamtpolymerisationszeit 10 Stunden. Das gebildete Polyalkylmethacrylat besitzt ein Molekulargewicht $\bar{M}_w \approx$ 70.000 bei einer Uneinheitlichkeit U ≈ 1 (Bestimmung mit der GPC) und ist damit nach DIN 51382 praktisch scherstabil. Der hierbei auf das OCP aufgepfropfte Anteil hat Emulgatorfunktion.

Danach Zugabe von:

111,6 g Äthylen-Propylen-Copolymerisat
(72% Äthylen; $\bar{M}_w$ = 200.000; U = 0,7; SSI*) (1%ig Mineralöl) = 53).

Die Auflösung erfolgt innerhalb von 8 Stunden bei 100 °C. Polymerisatgehalt der Emulsion: 47,4 Gew.-%

Viskosität (100 °C, 47,4%ig): 1400 mm²/s
Viskosität (100 °C, 5%ig in Mineralöl mit $\eta$100 °C = 5,3 mm²/s): 13,5 mm²/s
SSI* (5%ig Mineralöl): 40

Nach Verdünnen der 47,4%igen Emulsion mit Mineralöl ($\eta$100 °C = 5,3 mm²/s) auf 40% Polymerisatgehalt:

Viskosität (100 °C, 40%ig): 1400 mm²/s.

Nach Verdünnen der 47,4%igen Emulsion mit Phthalsäure-di-butylester ($\eta$100 °C = 2,3 mm²/s) auf 40% Polymerisatgehalt:

Viskosität (100 °C, 40%ig) = 650 mm²/s.

Die Verdünnung mit Mineralöl auf 40% Polymerisatgehalt führt in diesem Fall zu keiner Viskositätserniedrigung, da diese gerade durch das stärkere Anquellen der dispersen OCP-Phase kompensiert wird.

Beispiel 3

In einem 4-I-Vierhalskolben mit Rührer, Thermometer, Rückflusskühler und Dosierleitung wird folgende Mischung vorgelegt:

1577,5 g Mineralöl ($\eta$100 °C = 5,3 mm²/s
426,5 g Äthylen-Propylen-Copolymerisat
(72% Äthylen; $\bar{M}_w$ = 100.000; U = 0,8; SSI*) (1%ig Mineralöl) = 22)

Nach Auflösen bei 100 °C innerhalb von 8 Stunden Zusatz von:

426,5 g Methacrylsäureester eines $C_{12}$–$C_{18}$-Alkoholgemisches
3,25 g tert.-Butylperoctoat.

Dann wird nachstehendes Gemisch bei 98 °C innerhalb von 3,5 Stunden gleichmässig zudosiert:

569,0 g Methacrylsäureester eines $C_{12}$–$C_{18}$-Alkoholgemisches
9,7 g tert.-Butylperoctoat.

Zwei Stunden nach Zulaufende wird mit 2,2 g tert.-Butylperoctoat nachgefüttert. Gesamtpolymerisationszeit 10 Stunden. Das gebildete Polyalkylmethacrylat besitzt ein Molekulargewicht $\bar{M}_w \approx$ 70.000 bei U ≈ 1 (Bestimmung mit der GPC) und ist damit nach DIN 51382 praktisch scherstabil. Der hierbei auf das OCP aufgepfropfte Anteil hat Emulgatorfunktion.

Anschliessend wird folgendes Gemisch zugegeben:

44,6  g N-Vinylpyrrolidon
14,9  g N-Vinylimidazol
3,70 g tert.-Butylperbenzoat.

Die Pfropfung erfolgt bei 130 °C, wobei jeweils nach 1 und 2 Stunden weitere 1,79 g tert.-Butylperbenzoat zugegeben werden. Gesamtdauer der Pfropfung 8 Stunden. Es wird eine trübe, viskose Emulsion erhalten.

Polymerisatgehalt der Emulsion: 48,8 Gew.-%
Viskosität (100 °C, 48,8%ig): 22.000 mm²/s
Viskosität (100 °C, 5%ig in Mineralöl mit $\eta$100 °C = 5,3 mm²/s): 11,4 mm²/s
SSI* (5%ig in Mineralöl mit $\eta$100 °C = 5,3 mm²/s): 23

Stickstoffgehalt des isolierten Polymerisats: 0,40 Gew.-%.

Nach Verdünnen der 48,8%igen Emulsion mit Mineralöl ($\eta$100 °C = 5,3 mm²/s) auf 40% Polymerisatgehalt:

Viskosität (100 °C, 40%ig): 6400 mm²/s

Nach Verdünnen der 48,8%igen Emulsion mit Phosphorsäuretributylester auf 40% Polymerisatgehalt:

Viskosität (100 °C, 40%ig): 4000 mm²/s.

Beispiel 4

Verfahrensweise und Apparatur wie in Beispiel 3, aber 2-I-Vierhalskolben.

Vorlage von:

631,0  g Mineralöl ($\eta$100 °C = 5,3 mm²/s)
170,0  g Äthylen-Propylen-Copolymerisat
(50% Äthylen; $\bar{M}_w$ = 95.000; U = 0,8; SSI*) (1%ig Mineralöl) = 25)
170,6  g Methacrylsäureester eines $C_{12}$–$C_{18}$-Alkoholgemisches
0,87 g tert.-Butylperoctoat.

Zulauf bei 90 °C von:

230  g Methacrylsäureester eines $C_{12}$–$C_{18}$-Alkoholgemisches
1,4  g tert.-Butylperoctoat.

Nachfüttern mit 0,8 g tert.-Butylperoctoat. Gesamtpolymerisationszeit 10 Stunden. Der hierbei auf das OCP aufgepfropfte Anteil des gebildeten Methacrylats hat Emulgatorfunktion.

Polymerisatgehalt der Emulsion: 47,6 Gew.-%
Viskosität (100 °C, 47,6%ig): 4650 mm²/s
Viskosität (100 °C, 5%ig in Mineralöl mit $\eta$100 °C = 5,3 mm²/s):
SSI* (5%ig Mineralöl): 20

Beispiel 5

In diesem Beispiel wird das Produkt nach Beispiel 4 als Emulgator für die Dispergierung eines Äthylen-Propylen-Copolymerisats in einer 55 Gew.-%igen Mineralöllösung eines Poly-$C_{12}$–$C_{18}$-Alkylmethacrylats ($\bar{M}_w$ = 60.000) verwendet.

Folgende Komponenten werden bei 100 °C intensiv vermischt:

200 g Poly-$C_{12}$-$C_{18}$-Alkylmethacrylat
(55%ig in Mineralöl, $\bar{M}_w$ = 60.000)
64,8 g Dibutylphthalat
20,0 g Mineralöl ($\eta$100 °C = 5,3 mm²/s)
33,6 g Emulgator nach Beispiel 5
49,0 g Äthylen-Propylen-Copolymerisat
(72% Äthylen; $\bar{M}_w$ = 100.000, SSI* = 22)

Es wird eine trübe, viskose Emulsion erhalten.
Polymerisatgehalt: 47,6 Gew.-%
Viskosität (100 °C, 47,6%ig): 4200 mm²/s
Viskosität (100 °C, 10%ig in Mineralöl mit $\eta$ 100 °C = 5,3 mm²/s): 19,0 mm²/s
SSI* (5%ig Mineralöl): 18

Beispiel 6

Analog Beispiel 5, aber als Emulgator wird die 47,6%ige Lösung in Mineralöl eines anionisch hergestellten Blockcopolymerisats auf 50 Gew.-% Isopren und 50 Gew.-% Decylmethacrylat ($\bar{M}_w$ = 200.000, U = 0,3) eingesetzt. Der Polyisopren-1,4-Block ist zu über 95% hydriert.

Es wird eine trübe, viskose Emulsion erhalten.
Polymerisatgehalt: 47,6 Gew.-%
Viskosität (100 °C, 47,6%ig): 4100 mm²/s
Viskosität (100 °C, 10%ig in Mineralöl mit $\eta$ 100 °C = 5,3 mm²/s): 20,5 mm²/s
SSI* (5%ig in Mineralöl): 20

Beispiel 7

Apparatur und Arbeitsweise wie im Beispiel 3, aber 5-l-Vierhalskolben.

Vorlage von:
2524 g Mineralöl ($\eta$100 °C = 5,3 mm²/s)
682,4 g Äthylen-Propylen-Copolymerisat
(72% Äthylen; $\bar{M}_w$ = 70.000; U = 0,74; SSI* (1%ig Mineralöl) = 17)

Nach Auflösen bei 100 °C innerhalb von 8 Stunden Zugabe von:
320,4 g Methacrylsäureester eines $C_{12}$-$C_{18}$-Alkoholgemisches
35,6 g Dimethylaminoäthylmethacrylat
3,1 g tert.-Butylperoctoat

Dann wird nachstehendes Gemisch bei 85 °C innerhalb von 3,5 Stunden zudosiert:
1.112 g Methacrylsäureester eines $C_{12}$-$C_{18}$-Alkoholgemisches
124 g 2-Dimethylaminoäthylmethacrylat
5,6 g tert.-Butylperoctoat

Zwei Stunden nach Zulaufende wird mit 3,2 g tert.-Butylperoctoat nachgefüttert. Gesamtpolymerisationszeit 10 Stunden. Der hierbei auf das OCP aufgepfropfte Anteil des gebildeten Methacrylats hat Emulgatorfunktion.

Polymerisatgehalt der Emulsion: 47,4 Gew.-%
Viskosität (100 °C, 47,4%ig) 11.000 mm²/s
Viskosität (100 °C, 10%ig in Mineralöl mit $\eta$ 100 °C = 5,3 mm²/s): 21,72 mm²/s
SSI* (5%ig Mineralöl): 21)

Beispiel 8

Apparatur und Arbeitsweise wie in Beispiel 1, aber 5-l-Vierhalskolben.

Vorlage von:
1450 g Mineralöl ($\eta$100 °C = 5,3 mm²/s)
161,2 g Äthylen-Propylen-Copolymerisat
(72% Äthylen; $\bar{M}_w$ = 100.000; U = 0,9; SSI* (1%ig Mineralöl) = 23)

Nach 8stündigem Lösen bei 100 °C Zusatz von:
179,1 g Methacrylsäureester eines $C_{12}$-$C_{18}$-Alkoholgemisches
7,14 g tert.-Butylperoctoat
3,98 g Dodecylmercaptan

Danach Zulauf von nachstehendem Gemisch bei 98 °C während 3,5 Stunden:
1809 g Methacrylsäureester eines $C_{12}$-$C_{18}$-Alkoholgemisches
30,7 g tert.-Butylperoctoat.

Zwei Stunden nach Zulaufende wird mit 4 g tert.-Butylperoctoat nachgefüttert. Polymerisationszeit 10 Stunden. Der hierbei auf das OCP aufgepfropfte Anteil des gebildeten Methacrylats hat Emulgatorfunktion.

Danach Zusatz von:
695 g Äthylen-Propylen-Copolymerisat
(72% Äthylen; $\bar{M}_w$ = 100.000; U = 0,9; SSI* (1%ig Mineralöl): = 23)

Nach Auflösen bei 100 °C innerhalb von 8 Stunden Zugabe von:
84 g N-Vinylpyrrolidon
28 g N-Vinylimidazol
7 g tert.-Butylperbenzoat

Die Pfropfung erfolgt bei 130 °C, wobei jeweils nach 1 und 2 Stunden mit 3,4 g tert.-Butylperbenzoat nachgefüttert wird. Es wird eine trübe, viskose Emulsion erhalten.

Polymerisatgehalt: 65,6 Gew.-%
Viskosität (100 °C, 65,5%ig): 16.250 mm²/s
Viskosität (100 °C, 3,5%ig in Mineralöl mit $\eta$ 100 °C 5,3 mm²/s): 12,6 mm²/s
SSI* (3,5%ig Mineralöl): 30.

Verdünnung der 65,5%igen Emulsion mit Dibutylphthalat auf 60% Polymerisatgehalt:
Viskosität (100 °C, 60%ig): 7.200 mm²/s.

Trotz der starken Erhöhung der Polymerisatkonzentration von 40 auf 60% ist die Viskosität der Emulsion von 3800 mm²/s nur auf 7200 mm²/s angestiegen (vgl. Beispiel 1). Dies ist darauf zurückzuführen, dass weniger Mineralöl anwesend ist und dadurch das dispers verteilte OCP in einem noch geringeren Quellungszustand vorliegt.

**Patentansprüche**

1. Konzentrierte Polymerisatemulsionen aus zur Verbesserung des Viskositätsindex geeigneten Polymethacralaten und Olefincopolymerisaten in Mineralöl zur Verwendung als Öladditive, dadurch gekennzeichnet, dass diese als kontinuierliche Phase Poly(meth)acrylate mit einem definierten niedrigen Molgewichtsbereich, als disperse Phase ein Olefincopolymerisat mit einem hinsichtlich der Verdickungswirkung komplementären Molekulargewicht, ein Trägermedium, das gegenüber den Poly(meth)acrylsäureestern als gutes Lösungsmittel und aufgrund des darin gelösten Poly(meth)acrylsäureesters, gegenüber den Olefincopolymerisaten als wesentlich weniger gutes Lösungsmittel wirkt und als stabilisierendes Mittel für die Phasenverteilung ein Pfropf- und/oder ein Blockpolymerisat aus Olefincopolymerisaten und (Meth)acrylsäureestern enthalten, mit der Massgabe, dass beim mehrstufigem OCP-Zusatz, das Trägermedium aus Mineralöl und Lösungsmitteln aus der Gruppe der Ester und/oder der höheren Alkohole, die gegenüber dem OCP als ein wesentlich weniger gutes Lösungsmittel wirken, besteht.

2. Konzentrierte Polymerisatemulsion gemäss Patentanspruch 1, dadurch gekennzeichnet, dass der Gesamtpolymerisatgehalt grösser als 20 Gew.-%, vorzugsweise grösser als 30 Gew.-%, ist.

3. Konzentrierte Polymerisatemulsion gemäss den Patentansprüchen 1 und 2, dadurch gekennzeichnet, dass sie als kontinuierliche Phase Poly(meth)acrylsäureester mit einem Molekulargewichtsbereich zwischen $\bar{M}_w$ = 50.000 und $\bar{M}_w$ = 250.000, vorzugsweise $\bar{M}_w$ = 60.000 bis 120.000 und als disperse Phase ein Olefincopolymerisat mit einem $\bar{M}_w$ grösser als 50.000, vorzugsweise zwischen 70.000 und 150.000 enthalten.

4. Konzentrierte Polymerisatemulsion gemäss den Patentansprüchen 1 bis 3, dadurch gekennzeichnet, dass der Anteil an Poly(meth)acrylsäureester 95 bis 40 Gew.-% und der Anteil an Olefincopolymerisat 5 bis 60 Gew.-%, bezogen auf die gesamte Polymerisatmenge, ausmacht.

5. Konzentrierte Polymerisatemulsion gemäss den Patentansprüchen 1 bis 4, dadurch gekennzeichnet, dass das Trägermedium das gegenüber den Poly(meth)acrylsäureestern als gutes Lösungsmittel und aufgrund des darin gelösten Poly(meth)acrylsäureesters gegenüber den Olefincopolymerisaten als wesentlich weniger gutes Lösungsmittel wirkt, das Olefincopolymerisat zu weniger als 5 Gew.-%, vorzugsweise weniger als 2 Gew.-%, zu lösen imstande ist.

### Claims

1. Concentrated polymer emulsions consisting of olefin copolymers and polymethacrylates suitable for improving the viscosity index, in mineral oil, for use as oil additives, characterised in that they contain, as the continuous phase, poly(meth)acrylates with a defined low molecular weight range, and, as the dispersed phase, an olefin copolymer with a complementary molecular weight with respect to the thickening effect, a carrier medium which is an effective solvent for the poly(meth)acrylic acid esters and a substantially less effective solvent for the olefin copolymers, owing to the poly(meth)acrylic acid ester dissolved therein, and, as a stabilising agent for the phase distribution, a graft polymer and/or a block polymer made up of olefin copolymers and (meth)acrylic acid esters, with the proviso that, if the OCP is added in several stages, the carrier medium consists of mineral oil and solvents selected from the group comprising esters and/or higher alcohols, which are substantially less effective solvents of the OCP.

2. Concentrated polymer emulsion as claimed in claim 1, characterised in that the total polymer content is more than 20% by weight, preferably more than 30% by weight.

3. Concentrated polymer emulsion as claimed in claims 1 and 2, characterised in that it contains, as the continuous phase, poly(meth)acrylic acid esters with a molecular weight in the range from $\bar{M}_w$ = 50,000 to $\bar{M}_w$ = 250,000, preferably from $\bar{M}_w$ = 60,000 to 120,000 and, as the dispersed phase, an olefin copolymer with an $\bar{M}_w$ of more than 50,000, preferably between 70,000 and 150,000.

4. Concentrated polymer emulsion as claimed in claims 1 to 3, characterised in that the content of poly(meth)acrylic acid ester is from 95 to 40% by weight and the content of olefin copolymer is from 5 to 60% by weight, based on the total quantity of polymer.

5. Concentrated polymer emulsion as claimed in claims 1 to 4, characterised in that the carrier medium is an effective solvent of the poly(meth)acrylic acid esters and a substantially less effective solvent of the olefin copolymers on account of the poly(meth)acrylic ester dissolved therein, and is capable of dissolving less than 5% by weight, preferably less than 2% by weight, of the olefin copolymer.

### Revendications

1. Emulsions concentrées de polymères consistant en polyméthacrylates et copolymères d'oléfines appropriés pour l'amélioration de l'indice de viscosité, dans l'huile minérale, en vue de l'utilisation en tant qu'additif à des huiles, caractérisées en ce que ces émulsions contiennent, en tant que phase continue, des poly(méth)acrylates dans un intervalle de poids moléculaire bas et défini, en tant que phase dispersée un copolymère d'oléfines de poids moléculaire complémentaire à l'égard de l'effet d'épaississement, un milieu véhicule qui est bon solvant à l'égard des esters poly(méth)acryliques mais beaucoup moins bon solvant à l'égard des copolymères d'oléfines en raison de l'ester poly(méth)acrylique qu'il contient en solution, et en tant qu'agent stabilisant pour la répartition des phases un polymère greffé et/ou un polymère séquencé de copolymères d'oléfines et d'esters (méth)acrylique, étant spécifié que, dans le cas d'une addition de l'OCP en plusieurs stades, le milieu véhicule consiste en huile minérale et solvants du groupe des esters et/ou des alcools supérieurs beaucoup moins bons solvants à l'égard de l'OCP.

2. Emulsion concentrée de polymères selon la revendication 1, caractérisée en ce que la teneur totale en polymères est supérieure à 20% et de préférence supérieure à 30% en poids.

3. Emulsion concentrée de polymères selon les revendications 1 et 2, caractérisée en ce qu'elle contient en tant que phase continue des esters poly(méth)acryliques dans un intervalle de poids moléculaire allant de $\bar{M}_w$ = 50.000 à $\bar{M}_w$ = 250.000, de préférence de $\bar{M}_w$ = 60.000 à 120.000, et en tant que phase dispersée un copolymère d'oléfines ayant une valeur de $\bar{M}_w$ supérieure à 50.000 et allant de préférence de 70.000 à 150.000.

4. Emulsion concentrée de polymères selon les revendications 1 à 3, caractérisée en ce que l'ester poly(méth)acrylique représente de 95 à 40% et le copolymère d'oléfines de 5 à 60% du poids total des polymères.

5. Emulsion concentrée de polymères selon les revendications 1 à 4, caractérisée en ce que le milieu véhicule qui est bon solvant à l'égard des esters poly(méth)acryliques et, en raison de l'ester poly(méth)acrylique qu'il contient en solution, beaucoup moins bon solvant à l'égard des copolymères d'olefines, est capable de dissoudre ce copolymère d'oléfines en proportions inférieures à 5% en poids et de préférence inférieures à 2% en poids.